# EUROPÄISCHE PATENTSCHRIFT

(11) **EP 1 071 342 B1**
(45) Veröffentlichungstag und Bekanntmachung des Hinweises auf die Patenterteilung: **05.11.2003**
(21) Anmeldenummer: 00900479.7
(22) Anmeldetag: 21.01.2000
(51) Int. Cl.: A23N 1/02

(54) **VORRICHTUNG ZUR ZERKLEINERUNG VON ORGANISCHEN SUBSTANZEN**
DEVICE FOR GRINDING ORGANIC SUBSTANCES
DISPOSITIF DESTINE A DECHIQUETER DES SUBSTANCES ORGANIQUES

(30) Priorität: 11.02.1999 CH 25999
(43) Veröffentlichungstag der Anmeldung: 31.01.2001
(73) Patentinhaber: Bucher-Guyer AG, 8166 Niederweningen (CH)
(72) Erfinder: KELLER, Max, CH-5304 Endingen (CH); Hartmann, Eduard, 5425 Schneisingen (CH)
(86) Internationale Anmeldenummer: CH0000029
(87) Internationale Veröffentlichungsnummer: WO00047065

(56) Entgegenhaltungen:
- US-A- 2 218 119
- US-A- 4 584 919
- US-A- 4 673 135
- US-A- 4 683 790
- US-A- 5 743 176

## Beschreibung

Die Erfindung betrifft eine Vorrichtung zur Zerkleinerung von organischen Substanzen, insbesondere zum Zerreissen von Früchten, gemäss dem Oberbegriff von Patentanspruch 1.

Eine Trommel-Schneidmaschine, insbesondere zum Schneiden von Zuckerrüben in Schnitzel, ist aus US-A-4,584,919 (Bittner) bekannt. Sie besitzt eine Anzahl von Halteelementen, welche über den Umfang der Trommel in gleichen Abständen angeordnet sind und sich im wesentlichen parallel zur Trommelachse erstrecken. Zwischen je zwei Halteelementen ist ein Messerkasten gehaltert, in dem mindestens ein Schneidmesser befestigt ist, dessen Schneidkante sich im wesentlichen in Umfangsrichtung erstreckt.

Auch zum Zerreissen von Früchten sind schon verschiedene Ausführungsformen von Trommelmühlen dieses Typs bekannt, z.B. die Typen Central von Bucher-Guyer AG, Niederweningen, Schweiz. Eine solche Trommelmühle umfasst einen in einem Stück hergestellten Trommelkörper, über dessen Umfang Halteelemente für die Reissmesser in geringen Abständen angeordnet sind. Im betriebsbereiten Zustand bildet die Trommel einer solchen Mühle einen im wesentlichen geschlossenen Hohlraum mit einer einseitigen axialen Öffnung, durch welche die zu zerreissenden Früchte mittels einer Transportschnecke zugeführt werden.

Bei derartigen Trommelmühlen haben sich folgende Nachteile gezeigt:
- Die in der Trommel mit hoher Geschwindigkeit umlaufenden Früchte, insbesondere Äpfel, erzeugen grosse Unwuchtkräfte. Die ganze Mühle schüttelt und erzeugt viel Lärm. Die Unwuchtkräfte wirken sich auch nachteilig auf die Lebensdauer der verwendeten Lager der Trommel aus.
- Trotz Variation einer Zahnteilung der Messer ist die Struktur der entstehenden Maische nur sehr wenig beeinflussbar. Diese Struktur beeinflusst aber das Ausbeute/Leistungsverhalten der Maische bei nachfolgenden Pressvorgängen, welches durch eine Prozessoptimierung nicht verbessert werden kann.
- Fremdkörper im Fruchtgut, wie Steine, erzeugen relativ grosse Unwuchten und beschädigen die Reissmesser stark.
- Eine Stopfhilfe für die Früchte und die Mahltrommel laufen mit gleicher Drehzahl. Die Mühle arbeitet nicht mit maximaler Leistung, da praktisch keine Vorstopfung erfolgt. Bei zu geringer Fruchtzuführung wird ein Feinanteil in der Maische sehr hoch. Dies wirkt sich nachteilig auf die Leistung einer nachfolgenden Pressung aus und führt zu Verstopfungen von Filtern für eine Fest/flüssig-Trennung.
- Der Mantel der Mahltromme mit den erforderlichen Maischeauslass-Schlitzen ist in der Herstellung sehr aufwendig.

Weiterhin ist aus US-A-4,683,790 (Bitter) auch schon eine Teller-Schneidmaschine, insbesondere zum Schneiden von Zuckerrüben in Schnitzel bekannt. Diese Maschine umfasst ein Maschinengestell und einen Tellerschneider mit Lagerung und Antrieb. Der Tellerschneider hat eine ebene Oberseite und gleichmässig verteilte Durchlässe für das geschnittene Produkt, welche sich vorzugsweise lang in radialer Richtung erstrecken. Aufnahmen für Schneidmesser sind an den Durchlässen angeordnet.

US-4,673,135 beschreibt eine Vorrichtung zur Zerkleinerung von Früchten mit einem angetriebenen, gelochten Schneidteller, dem die Früchte mittels zweier gegenläufiger Förderschnecken zugeführt werden. Die Schneidelemente sind einzelne, vorstehende Schneiden, welche durch einseitig ausgekrempelte Begrenzungen der Löcher im Schneidteller gebildet werden.

Bei Teller-Schneidmaschinen der bekannten Art besteht der Tellerschneider aus einer Stahlplatte mit Durchlässen für das geschnittene Produkt. Bei derartigen Tellermühlen haben sich mitunter folgende Nachteile gezeigt:
- Geringe Leistung, da nur ein Teilbereich des Tellers beaufschlagt wird.
- Eine Stopfschnecke zur Produktzuführung fehlt oder läuft mit gleicher Drehzahl wie der Teller, wobei sich ein ungenügender Stopfeffekt ergibt.
- Zu grosse Schneckengänge der Stopfschnecke führen zu Überlastung oder Blockierung.
- Die Funktion der Tellermühle ist an die Art des Mahlgutes schlecht anpassbar.
- Das Produkt einer Schneidmaschine ist als Pressgut für eine Entsaftung nicht geeignet.

US 5 743 176 beschreibt eine Entsaftungsvorrichtung für Früchte mit einem angetriebenen Rätzteller, an dessen Stirnseite Reisselemente zur Zerkleinerung der Früchte angeordnet sind, und mit einer Zuführschnecke zur Zuführung von Früchten zum Teller. Die Reisselemente sind einzelne, vorstehende Nasen, welche durch Auskerbungen der Oberfläche der Stirnseite des Teller gebildet werden.

Der Erfindung liegt die Aufgabe zugrunde, die genannten Nachteile der bekannten Vorrichtungen zur Zerkleinerung von organischen Substanzen durch eine neue Ausbildung zu vermeiden.

Gemäss der Erfindung umfasst die Vorrichtung zur Zerkleinerung von organischen Substanzen, bevorzugterweise zum Zerreissen von Früchten, einen um seine Achse drehbar gelagerten Teller nebst einem Motor zu dessen Drehantrieb, wobei an einer Stirnseite des Tellers Reisselemente angeordnet sind, sowie Mittel zur Zuführung der organischen Substanzen zur Stirnseite des Tellers, welche Mittel als Stopfvorrichtung mit Antriebsmotor ausgebildet sind und wobei die Stopfleistung der Stopfvorrichtung und die Zerkleinerungsleistung des drehbar gelagerten Tellers voneinander unabhängig einstellbar sind.
Die an der Stirnseite des Tellers angeordneten Reisselemente sind als mehrere auswechselbar befestigte, im wesentlichen radial verlaufendes Reissleisten mit sägeförmigen Kanten ausgebildet. Auf der Stirnseite des Tellers direkt neben den radial verlaufende Reissleisten ist mindestens auf deren einer Seite eine am äusseren Tellerrand offene Nut zur Abführung der zerkleinerten organischen Substanzen angebracht.

Die Stopfvorrichtung umfasst vorzugsweise eine Förderschnecke, deren Achse im wesentlichen in einer Verlängerung der Tellerachse liegt. Mit Vorteil führt die Stopfvorrichtung die organischen Substanzen im wesentlichen der gesamten Stirnfläche des Tellers über ein zylindrisches Gehäuse zu, dessen Ausgang der Stirnfläche in einem Abstand gegenübersteht, und das zylindrische Gehäuse umfasst Leitelemente, welche eine Drehbewegung der zugeführten organischen Substanzen sperren.

Ein vorteilhafter Betrieb der Vorrichtung wird möglichst durch Sensor-Mittel zur Erfassung des beim Drehantrieb des drehbar gelagerten Tellers wirksamen Drehmomentes, sowie mit den Sensor-Mitteln wirkverbundene Steuermittel zur Einstellung der Stopfleistung der Stopfvorrichtung auf einen Wert, welcher einem vorgegebenen Wert dieses Drehmomentes entspricht.

Weitere Varianten der Vorrichtung sind in den Patentansprüchen gekennzeichnet.

Ausführungsbeispiele der Erfindung sind in der folgenden Beschreibung und den Figuren der Zeichnung näher erläutert. Es zeigen:
Figur 1 einen schematischen Querschnitt durch eine Reissmühle für Früchte mit einer erfindungsgemässen Zerkleinerungsvorrichtung,
Figur 2 einen Querschnitt durch eine einseitige Nut mit rechteckigem Profil neben einem Reisselement in einem Drehteller der Reissmühle gemäss Figur 1,
Figur 3 einen Querschnitt durch eine beidseitige Nut neben einem Reisselement in einem Drehteller der Reissmühle gemäss Figur 1,
Figur 4 einen Querschnitt durch eine einseitige Nut mit rundem Profil neben einem Reisselement in einem Drehteller der Reissmühle gemäss Figur 1,
Fig. 5 einen Querschnitt durch eine einseitige Nut mit angeschrägtem Profil neben einem Reisselement in einem Drehteller der Reissmühle gemäss Fig. 1,
Fig. 6 einen Querschnitt durch einen Mantel eines zylindrischen Gehäuses einer Stopfvorrichtung zur Produktzuführung bei der Reissmühle gemäss Fig. 1,
Fig. 7 eine Aufsicht auf einen Drehteller der Reissmühle gemäss Fig. 1,
Fig. 8a, 8b, 8c zwei radiale Längsschnitte und einen radialen Querschnitt durch eine Lagerung eines Drehtellers der Reissmühle gemäss Fig. 1 mittels Distanzbolzen in verschiedenen axialen Lagen.
Fig. 9 ein Detail eines auswechselbaren Verschleissringes an dem zylindrischen Gehäuse der Stopfvorrichtung zur Produktzuführung gemäss Fig. 1 in einem Querschnitt senkrecht zur Gehäuseachse,
Fig. 10 das Detail gemäss Fig. 9 in einem Querschnitt parallel zur Gehäuseachse,
Fig. 11 einen Radialschnitt eines Details mit einem axial verstellbaren Verschleissring an dem zylindrischen Gehäuse der Stopfvorrichtung zur Produktzuführung gemäss Fig. 1 zur Veränderung eines Mahlspaltes zwischen Verschleissring und einem Drehteller der Reissmühle gemäss Fig. 1,
Fig. 12 eine radiale Aufsicht auf das Detail gemäss Fig. 11 und
Fig. 13 ein Schema einer Regelvorrichtung mit Steuerelementen für die Reissmühle gemäss Fig. 1 zur Wahl der Struktur des zerkleinerten Mahlproduktes.

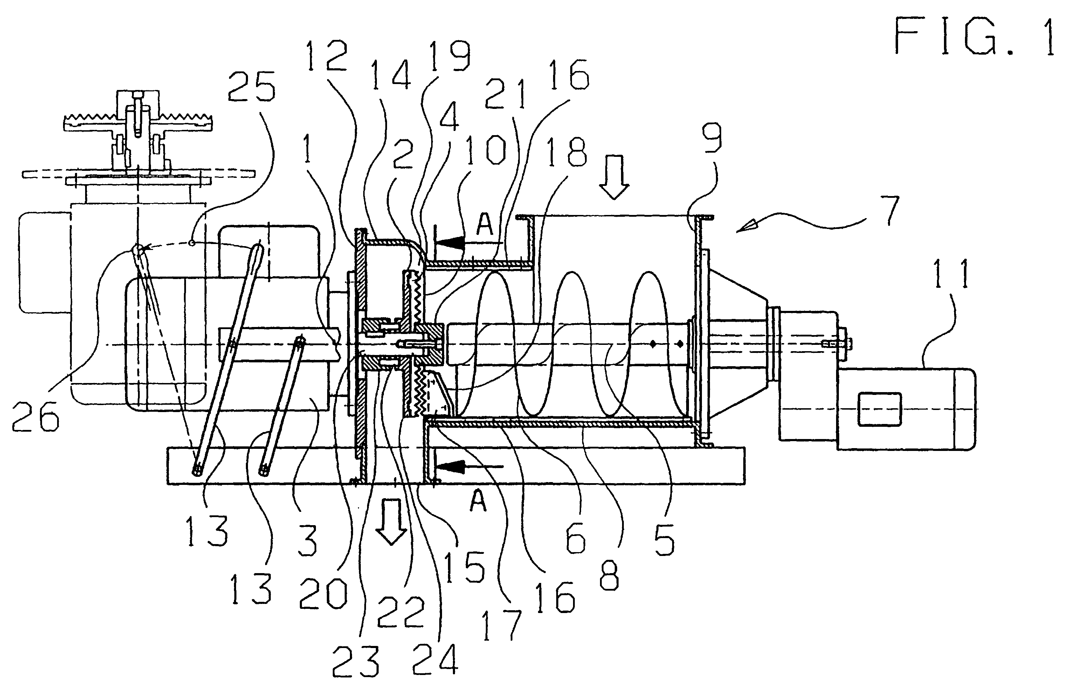

Wie der schematische Querschnitt durch eine Reissmühle für Früchte mit einer erfindungsgemässen Zerkleinerungsvorrichtung gemäss Fig. 1 zeigt, umfasst diese Reissmühle einen um eine horizontale Achse 1 drehbar gelagerten Teller 2 nebst einem Motor 3 zu dessen Antrieb. Auf einer Stirnseite des Tellers 2 sind, wie Fig. 7 genauer zeigt, mehrere Reissleisten 4 radial angeordnet. In einer Verlängerung der Achse 1 ist eine Achse 5 einer Förderschnecke 6 einer Stopfvorrichtung 7 zur Zuführung von organischen Substanzen zur Zerkleinerung angeordnet. Die Förderschnecke 6 liegt in einem zylindrischen Gehäuse 8 mit einer Einlassöffnung 9 und einem Ausgang 10, welcher der Stirnseite des Tellers 2 gegenüber liegt. Zum Antrieb der Förderschnecke 6 ist ein Motor 11 am Gehäuse 8 angeordnet.

Der Teller 2 und die Förderschnecke 6 drehen mit Vorteil gegenläufig. Die Drehzahl des Tellers 2 ist wesentlich grösser als jene der Förderschnecke 6. Der Teller 2 nebst seinem Motor 3 sind an einer Flanschplatte 12 montiert, welche lösbar mit dem Gehäuse 8 verbunden ist. Die aus Motor 3, Flanschplatte 12 und Teller 2 bestehende Baugruppe ist mittels einer Schwenkvorrichtung 13 vom Gehäuse 8 weg und in eine vertikale Lage der Achse 1 schwenkbar. Dadurch wird die Stirnseite des Tellers 2 mit den Reissleisten 4 für Reinigung und Werkzeugwechsel gut zugänglich. Das Gehäuse 8 reicht, wie Fig. 1 zeigt, über den Ausgang 10 hinaus und umschliesst den Teller 2 mit einem einseitig offenen Ringkanal 14, an welchen unten ein Ausfallschacht 15 für die zerkleinerten organischen Substanzen anschliesst.

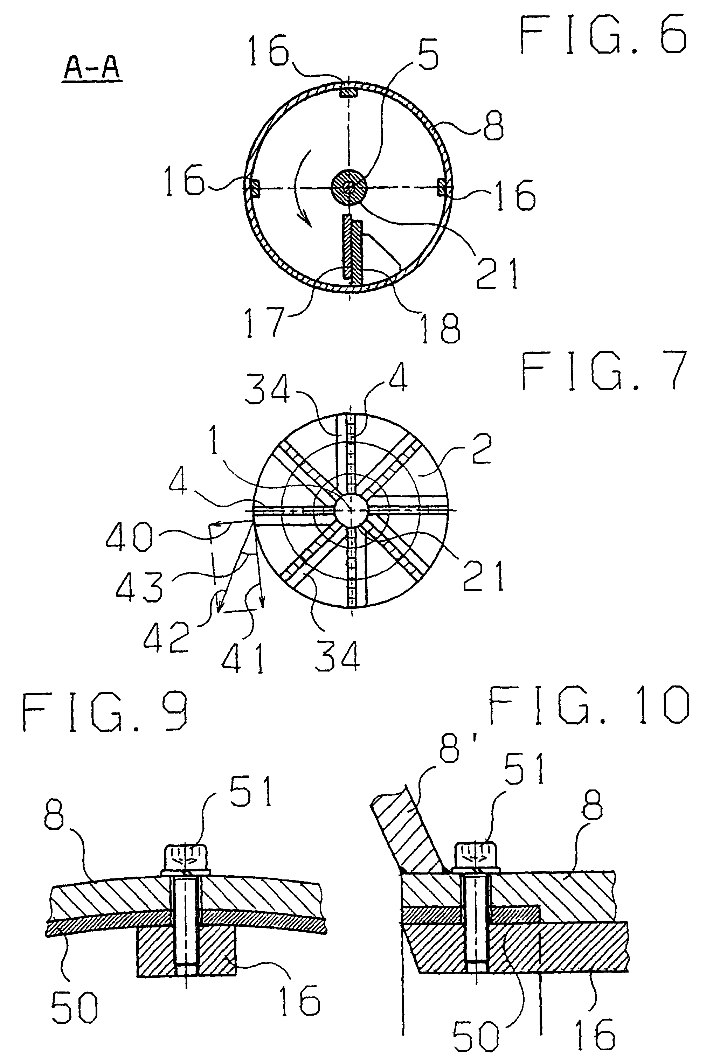

Zur besseren Ableitung der vom Teller 2 abgetrennten zerkleinerten organischen Substanzen schliesst das Gehäuse 8 mindestens im Bereich des Tellers 2 mit der Tellerebene einen spitzen Winkel ein. Wie in Fig. 1 erkennbar und in Fig. 6 genauer gezeigt, sind innen am Mantel des zylindrischen Gehäuses 8 achsparallel vier Leisten 16 angeordnet, welche als Drehsperre für die von der Förderschnecke 6 eingezogenen organischen Substanzen wirken.

Diese Drehsperren verhindern oder reduzieren ein Mitdrehen des Mahlgutes mit der Förderschnecke 6. Ziel ist, dass die Früchte, z.B. Äpfel, blockartig zum Teller 2 gelangen. Eine zu starke Relativbewegung der Äpfel zueinander erhöht einen Feinanteil im Mahlgut. Die zerkleinerte Maische wird vom Teller 2 in den Ringkanal 14 des Gehäuses 8 abgeschleudert. Dabei soll die Struktur der Maische möglichst wenig zerstört werden. Durch die Schräglage des Gehäuses 8 im Bereich des Tellers 2 wird vorteilhaft ein Aufprallwinkel der Maische zwischen 15 Grad und 75 Grad erzielt. Die Maische fällt dann über den Ausfallschacht 15 nach aussen.

Zusätzlich zu den Leisten 16 ist in den Fig. 1 und 6 am Ausgang 10 des Gehäuses 8 noch eine Drehsperre 17 mit einer Stützplatte 18 erkennbar. Die Reissleisten 4 besitzen zur Verbesserung der Zerreisswirkung sägeförmige Kanten, in welche die Drehsperre 17 zur Entfernung von Fasern aus den Zähnen mit einer Gegenverzahnung beim Betrieb der Reissmühle eingreift. Der Teller 2 steht dem Ausgang 10 des Gehäuses 8 über einen Mahlspalt 19 im Abstand gegenüber. Der Mahlspalt 19 bestimmt zusammen mit der Feinheit der Teilung der sägeförmigen Kanten der Reissleisten 4 und der Drehzahl des Tellers 2 im Wesentlichen die Struktur des Mahlgutes.

Wie Fig. 8a im Einzelnen zeigt, ist im Ausführungsbeispiel gemäss Fig. 1 der Mahlspalt 19 bei Stillstand der Vorrichtung veränderbar. Hierfür ist der Teller 2 auf einer Welle 20 mittels einer Befestigungskappe 21 über Distanzbolzen 22 in einem Mitnehmer 23 verankert. Durch einführen mindestens zweier Distanzbolzen 22 in Bohrungen verschiedener Tiefe im Mitnehmer 23 kann man den Abstand zwischen Teller 2 und Mitnehmer 23 und damit den Mahlspalt 19 verändern. Fig. 8c zeigt einen Schnitt gemäss Fig. 8a senkrecht zur Welle 20 längs der Linie C-C. Die Schnittebene der Fig. 8a ist in Fig. 8c durch die Linie A-A angegeben. Die Schnittebene der Fig. 8b ist in Fig. 8c durch die Linie B-B angegeben. Man erkennt in Fig. 8b, dass die hier geschnittenen Bohrungen im Mitnehmer 23 nicht durch Distanzbolzen 22 gemäss Fig. 8a ausgefüllt, jedoch tiefer als die Bohrungen im Mitnehmer 23 gemäss Fig. 8a sind. Die Befestigungskappe 21 wirkt zentral auf die radial auf der Stirnfläche des Tellers 2 mit Befestigungsnasen 24 auswechselbar eingehängten Reissleisten 4 und damit auf den Teller 2.

Ist der Teller 2 mittels der Schwenkvorrichtung 13 ausgeschwenkt, so können die Reissleisten 4 einfach durch Lösen nur einer Verschraubung der Befestigungskappe 21 gewechselt werden. Vorteilhaft ist dabei, wie Fig. 1 zeigt, die um 90 Grad geschwenkte Endlage des Motors 3. Die Reissleisten 4 können in dieser Lage auch ohne Befestigungskappe 21 nicht aus dem Teller 2 herausfallen.

Für das Ausschwenken des Motors 3 wird eine Verschraubung oder ein Schnellverschluss zwischen der Flanschplatte 12 und dem zylindrischen Gehäuse 8 gelöst, und mit der beidseitig des Motors 3 angeordneten Schwenkvorrichtung 13 wird die Baugruppe Motor 3, Flanschplatte 12, Teller 2 ausgeschwenkt. Bei Überwindung einer höchsten Lage 25 fällt diese Baugruppe in eine Lage 26. In dieser Lage 26 wird ein Teil der Schwenkvorrichtung 13 gelöst, der Motor 3 um 90 Grad nach oben geschwenkt und in der geschwenkten Lage wieder arretiert.

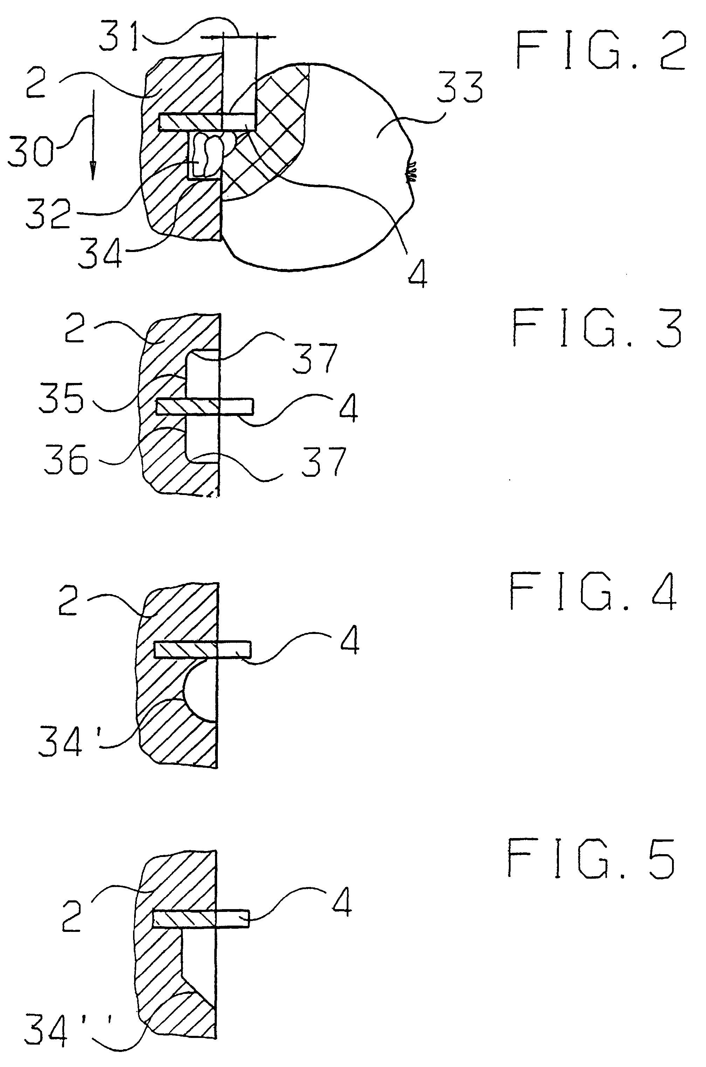

Fig. 2 zeigt einen Querschnitt durch eine der auf der Stirnseite des Tellers 2 gemäss Fig. 1 radial angeordneten Reissleisten 4. Infolge der Drehung des Tellers 2 wird eine Bewegung der Reissleiste 4 in Richtung des Pfeiles 30 nach unten angenommen. Dabei reisst der mit einer Höhe 31 über die Stirnseite des Tellers 2 vorstehende Teil der Reissleiste 4 Teile 32 aus einer von der Förderschnecke 6 angestopften Frucht 33 heraus. Diese Teile 32 werden durch eine einseitig in Richtung des Pfeiles 30 vor der Reissleiste 4 in dem Teller 2 angeordnete Nut 34 mit rechteckigem Profil abgeleitet. Die Nut 34 ist am Umfang des Tellers 2 offen, sodass hier die Teile 32 in den Ringkanal 14 und den Ausfallschacht 15 austreten können.

Wichtig ist, dass die Maische unmittelbar nach der Abtrennung vom Apfel möglichst wenig mechanisch beansprucht wird, damit ihre Struktur nicht verändert wird.

Unter dem Vorgang "Rätzen" wird hier ein teilweise kombinierter Effekt von Schneiden und Reissen verstanden. Ziel ist dabei, dass die aus einer Frucht 33 heraus gerätzten Teile 32 eine möglichst grosse freie Oberfläche aufweisen, damit viele Fruchtzellen frei liegen. So kann ein grosser Teil des Zellsaftes frei abfliessen, und ein am gerätzten Produkt nachfolgender Entsaftungs- und Pressvorgang wird erleichtert.

Der in Fig. 3 dargestellte Querschnitt entspricht jenem der Fig. 2, jedoch ist gemäss Fig. 3 beidseitig der Reissleiste 4 je eine Nut 35 und 36 angeordnet. Diese Anordnung hat den Vorteil, dass aus der Frucht 33 gemäss Fig. 2 heraus gerätzte Teile 32 bei Betrieb des Tellers 2 in beiden Drehrichtungen abgeführt werden. Die Reissleisten 4 können also beidseitig verwendet werden. Die Reissleisten 4 nützen sich regelmässig nur dort ab, wo sie gemäss der Laufrichtung 30 des Tellers 2 beansprucht werden. Ist eine Seite stumpf, so kann durch Drehrichtungswechsel die Lebensdauer der Reissleisten 4 verdoppelt werden. Die Nuten 35, 36 sind mit einem Radius 37 verrundet. Dadurch wird ein Festsetzen oder Verklemmen von Stielen und Kernen der Früchte 33 in den Nuten 35, 36 reduziert.

Der in Fig. 4 dargestellte Querschnitt entspricht jenem der Fig. 2, jedoch ist gemäss Fig. 4 die Nut 34' voll verrundet. Dadurch werden ungewollte Ablagerungen oder Verklemmungen von Teilen der Früchte 33 noch besser verhindert.

Der in Fig. 5 dargestellte Querschnitt entspricht ebenfalls jenem der Fig. 2, jedoch ist gemäss Fig. 5 die Nut 34'' angeschrägt, wodurch ebenfalls ein Verklemmen von Feststoffen in den Nuten 34'' verhindert wird.

Fig. 6 zeigt einen Querschnitt A-A gemäss Fig. 1 durch das zylindrische Gehäuse 8 der Reissmühle senkrecht zur Achse. Man erkennt drei der vier Leisten 16, welche sich als Drehsperre über die Mantellänge des Gehäuses 8 erstrecken. Weiterhin ist die Drehsperre 17 mit Stützplatte 18 dargestellt, welche sich am Ausgang 10 des Gehäuses 8 gemäss Fig. 1 über einen grösseren axialen Bereich erstreckt. Die Drehsperre 17 mit oder auch ohne Gegenverzahnung zu den Reissleisten 4 hat zwei Funktionen: Beruhigung der Früchte 33 vor den Reissleisten 4 durch Reduktion von Rollbewegungen mit dem Ergebnis einer besseren Maischestruktur, und Abstreifen von Fasern, die sich in den Reissleisten 4 verhängen und nicht abgeschleudert werden. Die Maischestruktur wird gleichmässiger, und die Leistung der Antriebsmotoren 3 und 11 wird verlustfrei und gezielt eingesetzt.

Fig. 7 zeigt eine Aufsicht auf die Stirnseite des drehbar gelagerten Tellers 2 gemäss Fig. 1 mit den Reissleisten 4 und einseitig unmittelbar benachbarten Nuten 34 zur Produktabführung. Die Reissleisten 4 sind radial angeordnet und ihre Verlängerungen treffen sich in der Drehachse 1 des Tellers 2. Es sind auch Anordnungen möglich, bei denen die Richtungen der Reissleisten 4 nicht auf die Drehachse 1 zeigen. Die Anzahl der Reissleisten 4 liegt mit Vorteil zwischen etwa 4 und 40. Die Reissleisten 4 können auch unterschiedliche Längen aufweisen. Die Nuten 34 liegen in Laufrichtung gesehen vor den Reissleisten. Die Maische verlässt die Nuten 34 mit einer Radialgeschwindigkeit 40 und einer Umfangsgeschwindigkeit 41, aus welchen eine Geschwindigkeit 42 mit einem Abströmwinkel 43 resultiert.

Fig. 9 zeigt ein Detail eines auswechselbaren Verschleissringes 50 an dem zylindrischen Gehäuse 8 der Stopfvorrichtung zur Produktzuführung gemäss Fig. 1 in einem Querschnitt senkrecht zur Gehäuseachse, Fig. 10 zeigt das gleiche Detail in einem Querschnitt parallel zur Gehäuseachse. Beide Querschnitte gehen durch eine Befestigungsschraube 51, welche durch den Verschleissring 50 hindurch in die Leiste 16 eingreift. In Fig. 10 ist auch die Fortsetzung 8' des Gehäuses 8 zum Ringkanal 14 gemäss Fig. 1 erkennbar.

Da mit einigen Mahlgütern zur Zerkleinerung auch gelegentlich Fremdkörper in die Reissmühle gelangen, ist der Rand des Gehäuses 8 am Mahlspalt 19 gemäss Fig. 1 einem starken Verschleiss unterworfen. Dementsprechend kann der Verschleissring 50 am Mantel des Gehäuses 8 mit der Verschraubung 51 ausgewechselt werden. Der Verschleissring 50 ist vorteilhaft aus einem verschleissarmen hochwertigen Stahl hergestellt.

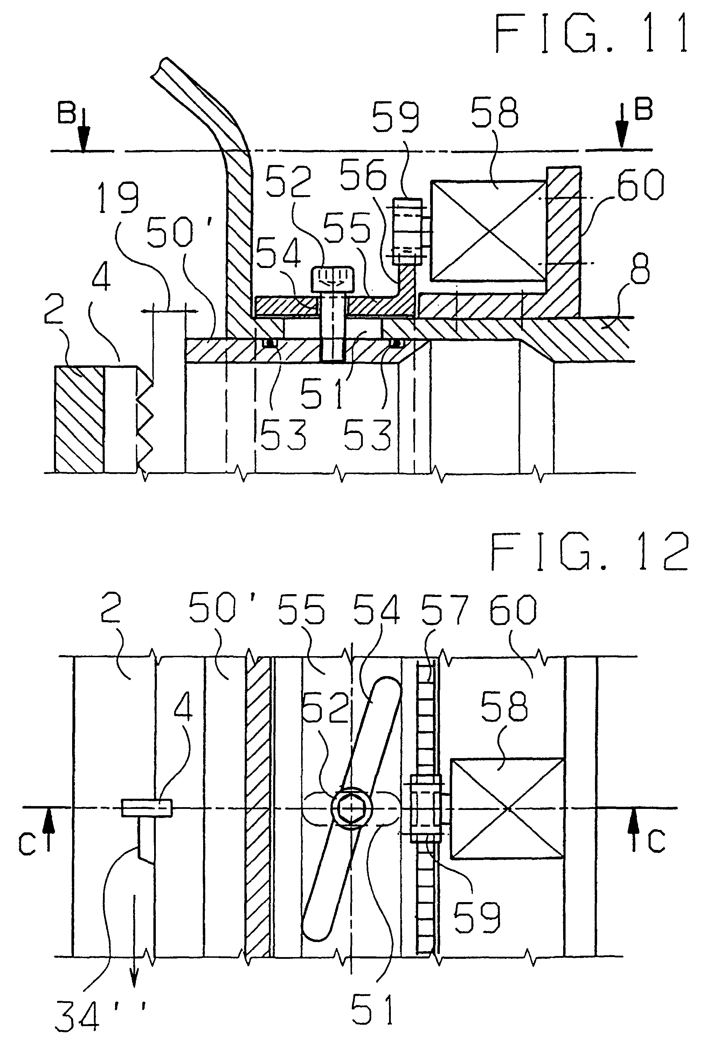

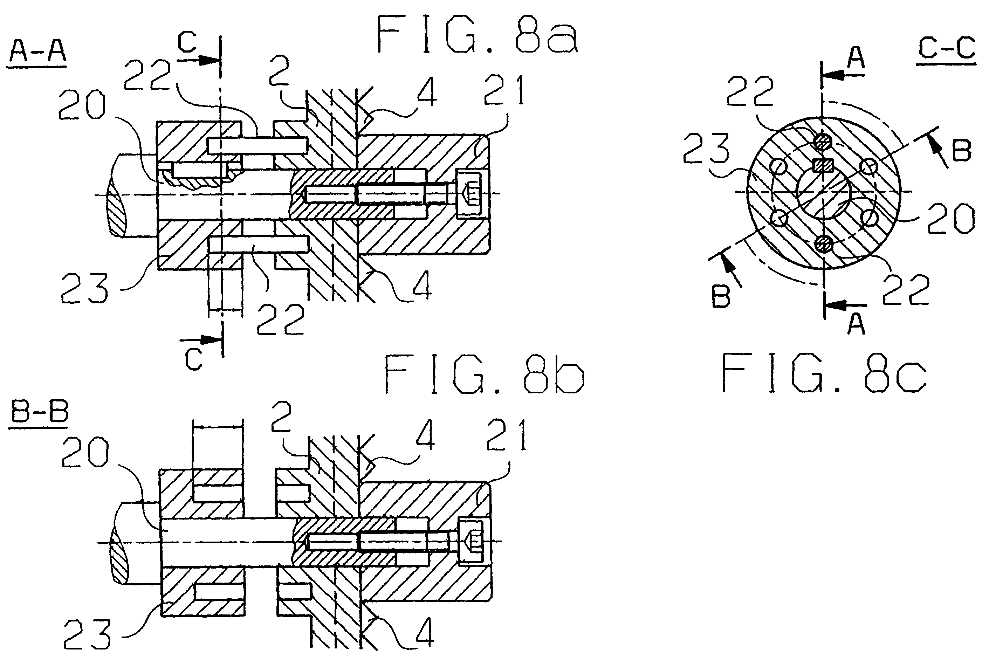

Fig. 11 zeigt einen Radialschnitt eines Details eines axial verstellbaren Verschleissringes 50' an dem zylindrischen Gehäuse 8 der Stopfvorrichtung zur Produktzuführung gemäss Fig. 1. Damit kann man den Mahlspalt 19 auch während des Betriebes und automatisch verstellen. Fig. 12 zeigt eine radiale Aufsicht in Richtung der Pfeile B-B gemäss Fig. 11, wobei die Schnittebene der Fig. 11 in Fig. 12 durch die Pfeile C-C bezeichnet ist. Längs des Umfanges des Verschleissringes 50' befinden sich im Gehäuse 8 mehrere zu dessen Achse parallele Schlitze 51, durch welche in den Verschleissring 50' eingeschraubte Bolzen 52 geführt sind. Der Innenraum des Gehäuses 8 ist durch zwei in den Verschleissring 50' eingelassene O-Ringe 53 nach aussen abgedichtet.

Die Bolzen 52 greifen weiterhin noch durch schräge Schlitze 54 in einem aussen auf das Gehäuse 8 aufgesetzten Steuerring 55 hindurch. Der Steuerring 55 weist an einem Flansch 56 einen Zahnkranz 57 auf, den ein von einem Motor 58 getriebenes Ritzel 59 antreibt. Der Motor 58 ist am Mantel des Gehäuses 8 über einen Flanschring 60 befestigt. Je nach Drehrichtung des Motors 58 wird der Mahlspalt 19 vergrössert oder verkleinert.

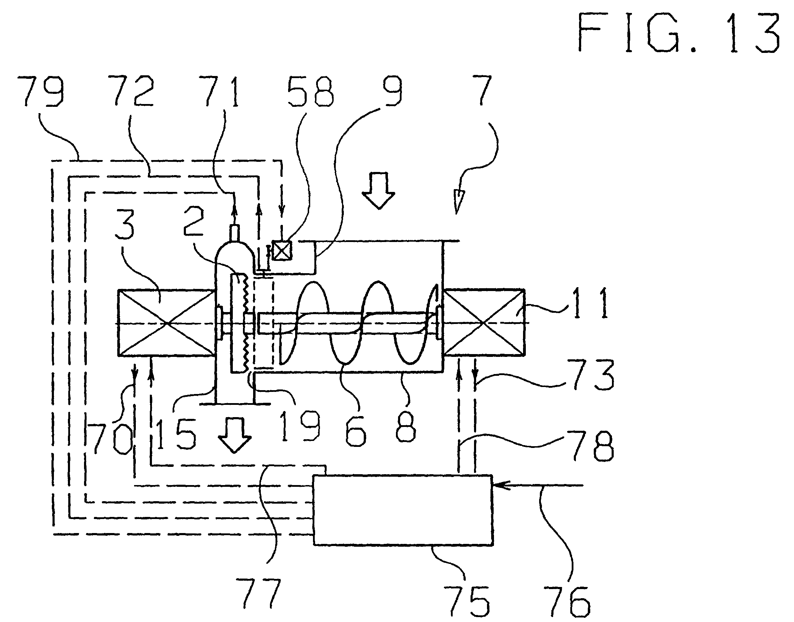

Fig. 13 zeigt ein Schema einer Regelvorrichtung mit Steuerelementen für die Reissmühle gemäss Fig. 1 zur Wahl der Struktur des zerkleinerten Mahlproduktes. Der Fig. 1 entsprechende Bauelemente tragen in Fig. 13 die Bezugszeichen gemäss Fig. 1. Zur Erfassung des Ist-Zustandes der Reissmühle sind gemäss Fig. 13 folgende Sensoren angeordnet: Ein Sensor für die Leistungsaufnahme des Antriebes 3 des Tellers 2 mit einer Signalleitung 70, ein Sensor zur Erfassung der Beschleunigungen bei Vibrationen der Zerreissvorrichtung mit einer Signalleitung 71, ein Wegaufnehmer für den Verschleissring zur Messung des Mahlspaltes 19 mit einer Signalleitung 72, und ein Sensor für die Leistungsaufnahme des Antriebes 11 der Förderschnecke 6 mit einer Signalleitung 73.

Die Signalleitungen 70, 71, 72, 73 sind, wie Fig. 13 zeigt, mit einem Regler 75 verbunden. In Abhängigkeit vom Ist-Zustand und von externen Vorgaben über eine Leitung 76 erzeugt der Regler 75 folgende Vorgaben für die Reissmühle: Eine Drehzahlvorgabe für den Antrieb 3 des Tellers 2 über eine Leitung 77, eine Drehzahlvorgabe für den Antrieb 11 der Förderschnecke 6 über eine Leitung 78, und eine Ansteuerung für den Stellmotor 58 für den Mahlspalt 19 über eine Leitung 79.

Mit den soweit beschriebenen Mess- und Steuergrössen werden bei der Vorrichtung zur Zerkleinerung von organischen Substanzen folgende Regel- und Steuerfunktionen erreicht: Regelkreis für das Drehmoment des Antriebes für den Teller 2. Hierbei wird die Drehzahl des Tellers 2 fest vorgegeben. Das Drehmoment des Tellerantriebes wird durch die Leistungsaufnahme über die Leitung 70 indirekt gemessen. Diese Messgrösse Drehmoment wird konstant gehalten durch Veränderung der Drehzahl der Förderschnecke 6 als Stellgrösse. Mit zunehmender Schneckendrehzahl steigt der Drehmomentbedarf des Tellerantriebes.

Beeinflussung der Struktur der Maische. Diese Struktur wird durch Verstellung folgender Parameter während des Betriebes der Reissmühle beeinflusst: Drehzahl des Tellers 2, Grösse des Mahlspaltes 19 und Leistungsaufnahme des Antriebes 3 des Tellers 2.

Aufgabengemäss werden mit der soweit beschriebenen Vorrichtung folgende Vorteile erreicht:
Durch die Abführung der Maische in den Nuten 34 des Tellers 2 und im Ringkanal 14 des Gehäuses 8 wird deren Struktur nicht durch Staueffekte verändert oder beschädigt. Es entstehen weniger Feinstanteile in der Maische, welche in Fruchtpressen zu Filterverstopfungen führen und die Pressleistung reduzieren.

Durch eine breite Variationsmöglichkeit in der Maischestruktur von fein bis sehr grob ist die Zerkleinerung an die Pressbarkeit und die Eigenschaften des Fruchtgutes optimal anpassbar. Sehr weiche Früchte können also sehr grob und sehr harte Früchte können sehr fein zerkleinert werden.

Im Vergleich zum eingangs genannten Stand der Technik läuft eine Mühle mit der vorliegenden zerkleinerungseinrichtung sehr ruhig und vibrationsarm. Eine solche Mühle ist auch sehr einfach abzudichten, falls sehr nasse Produkte oder Produkte mit einem Überdruck verarbeitet werden sollen. Es entstehen dann keine Saft- oder Druckverluste. Von grossem Nutzen ist eine Dichtheit der Mühle auch bei der Verarbeitung von Produkten mit flüchtigen Lösungsmitteln.

Bei der Verarbeitung von faserigen Produkten werden meistens abgetrennte Fasern von den Zahnungen der Reissleisten 4 abgeschleudert. Ein Zusetzen der Zahnlücken mit Fasern tritt nicht auf. Die Reissleistung und die Maischestruktur bleiben unverändert.

Verschleissteile der Mühle sind einfach und kostengünstig herstellbar. Bei Einwirkung von Fremdkörpern, wie Steine, Bretter usw. bleiben Beschädigungen gering.

Varianten von dem beschriebenen Aufbau und der Verwendung der Vorrichtung zur Zerkleinerung organischer Substanzen stehen dem Fachmann ohne weiteres zur Verfügung. So lässt sich die Struktur der zerkleinerten Produkte mit den angegebenen Steuer- und Regelmitteln im Hinblick auf ein optimales Ausbeute-Leistung Verhalten bei späteren Pressvorgängen selbsttätig laufend optimieren.

## Patentansprüche

1. Vorrichtung zur Zerkleinerung von organischen Substanzen, insbesondere zum Zerreissen von Früchten, umfassend einen um seine Achse drehbar gelagerten Teller (2) nebst einem Motor (3) zu dessen Drehantrieb, wobei an einer Stirnseite des Tellers (2) Reisselemente (4) angeordnet sind, sowie Mittel (7) zur Zuführung der organischen Substanzen zur Stirnseite des Tellers (2), welche als Stopfvorrichtung (7) mit Antriebsmotor (11) ausgebildet sind und wobei die Stopfleistung der Stopfvorrichtung (7) und die Zerkleinerungsleistung des drehbar gelagerten Tellers (2) voneinander unabhängig einstellbar sind, **dadurch gekennzeichnet, dass** die an der Stirnseite des Tellers (2) angeordneten Reisselemente als mehrere auswechselbar befestigte, im wesentlichen radial verlaufende Reissleisten (4) mit sägeförmigen Kanten ausgebildet sind und dass auf der Stirnseite des Tellers (2) direkt neben den radial verlaufenden Reissleisten (4) mindestens auf deren einer Seite eine am äusseren Tellerrand offene Nut (34, 35, 36) zur Abführung der zerkleinerten organischen Substanzen (32) angebracht ist.

2. Vorrichtung nach Anspruch 1, **dadurch gekennzeichnet, dass** die Stopfvorrichtung (7) eine Förderschnecke (6) umfasst, deren Achse (5) im wesentlichen in einer Verlängerung der Tellerachse (1) liegt.

3. Vorrichtung nach einem der vorangehenden Ansprüche, **dadurch gekennzeichnet, dass** die Stopfvorrichtung (7) die organischen Substanzen im wesentlichen der gesamten Stirnfläche des Tellers (2) über ein zylindrisches Gehäuse (8) zuführt, dessen Ausgang (10) der Stirnfläche in einem Abstand (19) gegenübersteht und dass das zylindrische Gehäuse (8) Leitelemente (16, 17) umfasst, welche eine Drehbewegung der zugeführten organischen Substanzen sperren.

4. Vorrichtung nach Anspruch 3, **dadurch gekennzeichnet, dass** das Ausgangsende (10) des zylindrischen Gehäuses (8) der Stopfvorrichtung (7) einen auswechselbaren Verschleissring (50, 50') aufweist.

5. Vorrichtung nach Anspruch 3, **dadurch gekennzeichnet, dass** der Abstand (19) zwischen dem Ausgangsende (10) des zylindrischen Gehäuses (8) und der Stirnfläche des Tellers (2) einstellbar ist.

6. Vorrichtung nach Anspruch 5, **dadurch gekennzeichnet, dass** Stellmittel (52, 56, 58, 59) zur Veränderung des Abstandes (19) zwischen Gehäuse (8) und Stirnfläche mittels eines Motors (58) während des Betriebes der Vorrichtung vorhanden sind.

7. Vorrichtung nach Anspruch 3, **dadurch gekennzeichnet, dass** der Abstand zwischen dem tellerseitigen Ende der Förderschnecke (6) und der Stirnfläche des Tellers (2) mindestens 50 mm beträgt.

8. Vorrichtung nach Anspruch 5, **dadurch gekennzeichnet, dass** der Teller auf einer Antriebswelle über eine Gewindeverbindung gelagert ist und dass der Abstand zwischen dem Ausgangsende des zylindrischen Gehäuses und der Stirnfläche des Tellers durch Verdrehen des Tellers gegen die Antriebswelle einstellbar ist.

9. Vorrichtung nach einem der Ansprüche 3-8, **dadurch gekennzeichnet, dass** mindestens eines der sperrenden Leitelemente (17) im Gehäuse (8) der Stopfvorrichtung (7) axial annähernd bis an die Reissleisten (4) am Teller (2) heranreicht und längs deren Kanten mit einer in die Sägeform passenden Zahnung als Abstreifelement eingreift.

10. Vorrichtung nach einem der vorangehenden Ansprüche, **dadurch gekennzeichnet, dass** die Höhe der Reissleisten gegenüber der Stirnseite des Tellers durch Einführen und Arretieren der Reissleisten in Radialnuten unterschiedlicher Tiefe einstellbar ist.

11. Vorrichtung nach Anspruch 10, **dadurch gekennzeichnet, dass** die Reissleisten (4) in den Radialnuten durch ein zentral angebrachtes Schraubelement (21) arretierbar und lösbar sind.

12. Vorrichtung nach einem der vorangehenden Ansprüche, **dadurch gekennzeichnet, dass** der Teller (2) nebst zugehörigem Motor (3) für einen Wechsel der Reissleisten (4) vom Gehäuse (8) der Stopfvorrichtung (7) wegschwenkbar ist.

13. Vorrichtung nach Anspruch 12, **dadurch gekennzeichnet, dass** der Teller (2) in eine Endlage wegschwenkbar ist, in welcher seine Stirnseite im wesentlichen horizontal und nach oben zeigend ausgerichtet ist.

14. Vorrichtung nach einem der Ansprüche 12 und 13, **dadurch gekennzeichnet, dass** sie eine bewegliche Stützvorrichtung (13) umfasst, welche eine, den Teller (2) nebst einer Antriebswelle (20) und den Antriebsmotor (3) umfassende Baueinheit beim Schwenkvorgang im Schwerpunkt der Baueinheit abstützt.

15. Vorrichtung nach einem der vorangehenden Ansprüche, **dadurch gekennzeichnet, dass** sie ein Gehäuse zum Aufnehmen und Abführen der zerkleinerten organischen Substanzen umfasst, welches mindestens den drehbar gelagerten Teller (2) als einseitig offenen Ringkanal (14) umschliesst, an das zylindrische Gehäuse (8) der Stopfvorrichtung (7) anschliesst und mindestens im Bereich des Tellers (2) zur Ableitung der organischen Substanzen mit der Tellerebene einen spitzen Winkel einschliesst.

16. Vorrichtung nach einem der vorangehenden Ansprüche, **dadurch gekennzeichnet, dass** der Drehantrieb (3) des drehbar gelagerten Tellers (2) wahlweise in beiden Drehrichtungen wirksam ist.

17. Vorrichtung nach einem der vorangehenden Ansprüche, **dadurch gekennzeichnet, dass** Sensor-Mittel (71) vorhanden sind, welche Vibrationen der Vorrichtung beim Betrieb erfassen und bei Überschreiten eines vorgebbaren Grenzwertes für die Vibrationen die Antriebe (3, 11) der Vorrichtung stillsetzen.

18. Vorrichtung nach einem der vorangehenden Ansprüche, **dadurch gekennzeichnet, dass** Sensor-Mittel (70) zur Erfassung des beim Drehantrieb des drehbar gelagerten Tellers (2) wirksamen Drehmomentes vorhanden sind, sowie mit den Sensor-Mitteln (70) wirkverbundene Steuermittel (75) zur Einstellung der Stopfleistung der Stopfvorrichtung (7) auf einen Wert, welcher einem vorgegebenen Wert dieses Drehmomentes entspricht.

19. Vorrichtung nach einem der vorangehenden Ansprüche, **dadurch gekennzeichnet, dass** beidseitig der Reissleisten (4) jeweils eine Nut (34, 35, 36) angeordnet ist.

20. Vorrichtung nach einem der vorangehenden Ansprüche, **dadurch gekennzeichnet, dass** die Nut (34, 35, 36) voll verrundet ist oder angeschrägt ist.

## Claims

1. Device for grinding organic substances, in particular for shredding fruits, including a disc (2) mounted to rotate about its axis, together with a motor (3) for driving it in rotation, shredding elements (4) being arranged on one end face of the disc (2), as well as means (7) for feeding the organic substances to the end face of the disc (2), in the form of a stuffing device (7) with a drive motor (11), wherein the stuffing capacity of the stuffing device (7) and the grinding capacity of the rotatably mounted disc (2) can be adjusted independently of one another, **characterised in that** the shredding elements arranged on the end face of the disc (2) are in the form of a plurality of replaceably mounted, substantially radially extending shredding strips (4) with serrated edges and that a groove (34, 35, 36) open at the outer edge of the disc is provided on at least one side of the end face of the disc (2) directly alongside the radially extending shredding strips (4) for the discharge of the ground organic substances (32).

2. Device according to claim 1, **characterised in that** the stuffing device (7) includes a conveying screw (6), the axis (5) of which is essentially an extension of the disc axis (1).

3. Device according to one of the preceding claims, **characterised in that** the stuffing device (7) feeds the organic substances essentially to the entire end face of the disc (2) via a cylindrical housing (8), the outlet (10) of which is situated opposite the end face at a distance (19) and that the cylindrical housing (8) includes guide elements (16, 17) preventing rotational movement of the organic substances fed.

4. Device according to claim 3, **characterised in that** the outlet end (10) of the cylindrical housing (8) of the stuffing device (7) has a replaceable wear ring (50, 50').

5. Device according to claim 3, **characterised in that** the distance (19) between the outlet end (10) of the cylindrical housing (8) and the end face of the disc (2) is adjustable.

6. Device according to claim 5, **characterised by** adjusting means (52, 56, 58, 59) for varying the distance (19) between the housing (8) and the end face by means of a motor (58) during the operation of the device.

7. Device according to claim 3, **characterised in that** the distance between the disc end of the conveying screw (6) and the end face of the disc (2) is at least 50 mm.

8. Device according to claim 5, **characterised in that** the disc is mounted on a drive shaft by means of a threaded joint and that the distance between the outlet end of the cylindrical housing and the end face of the disc can be adjusted by rotating the disc relative to the drive shaft.

9. Device according to one of claims 3 to 8, **characterised in that** at least one of the locking guide elements (17) in the housing (8) of the stuffing device (7) extends axially approximately as far as the shredding strips (4) on the disc (2) and meshes along the edges thereof with toothing matching the serration and serving as a stripper element.

10. Device according to one of the preceding claims, **characterised in that** the height of the shredding strips relative to the end face of the disc can be adjusted by introducing the shredding strips into radial grooves of different depths and locking them therein.

11. Device according to claim 10, **characterised in that** the shredding strips (4) can be locked in and released from the radial grooves by a centrally mounted screw element (21).

12. Device according to one of the preceding claims, **characterised in that** the disc (2) and the associated motor (3) can be pivoted away from the housing (8) of the stuffing device (7) in order to replace the shredding strips (4).

13. Device according to claim 12, **characterised in that** the disc (2) can be pivoted away into an end position in which its end face is aligned substantially horizontally and is directed upwards.

14. Device according to one of claims 12 and 13, **characterised in that** it includes a movable supporting device (13) which supports a unit including the disc (2) together with a drive shaft (20) and the drive motor (3) in the centre of gravity of the unit during the pivoting operation.

15. Device according to one of the preceding claims, **characterised in that** it includes a housing for receiving and discharging the ground organic substances surrounding at least the rotatably mounted disc (2) in the form of an annular channel (14) open at one side, connected to the cylindrical housing (8) of the stuffing device (7) and including an acute angle with the plane of the disc at least in the region of the disc (2) for the discharge of the organic substances.

16. Device according to one of the preceding claims, **characterised in that** the rotary drive (3) of the rotatably mounted disc (2) is operative in either direction of rotation as required.

17. Device according to one of the preceding claims, **characterised by** sensor means (71) which detect vibrations of the device during operation and stop the drives (3, 11) of the device if a predetermined limit value for the vibrations is exceeded.

18. Device according to one of the preceding claims, **characterised by** sensor means (70) for detecting the effective torque during the rotary drive of the rotatably mounted disc (2), as well as control means (75) operatively connected to the sensor means (70) for adjusting the stuffing capacity of the stuffing device (7) to a value corresponding to a predetermined value for this torque.

19. Device according to one of the preceding claims, **characterised in that** respective grooves (34, 35, 36) are arranged on either side of the shredding strips (4).

20. Device according to one of the preceding claims, **characterised in that** the groove (34, 35, 36) is fully rounded or bevelled.

## Revendications

1. Dispositif de fragmentation de substances organiques, notamment destiné à broyer des fruits, comprenant un plateau (2) monté à rotation autour de son axe et associé à un moteur (3) affecté à l'entraînement dudit plateau en rotation, des éléments broyeurs (4) étant disposés à une face frontale du plateau (2) ; ainsi que des moyens (7) assurant l'amenée des substances organiques jusqu'à la face frontale du plateau (2), et réalisés sous la forme d'un dispositif de bourrage (7) équipé d'un moteur d'entraînement (11), la puissance de bourrage dudit dispositif de bourrage (7), et la puissance de fragmentation du plateau (2) monté rotatif, étant réglables indépendamment l'une de l'autre, **caractérisé par le fait que** les éléments broyeurs, disposés à la face frontale du plateau (2), sont réalisés sous la forme de plusieurs barrettes de broyage (4) fixées de manière interchangeable, s'étendant pour l'essentiel dans le sens radial et pourvues d'arêtes en forme de scie ; et **par le fait qu'**une rainure (34, 35, 36), ouverte sur le bord extérieur du plateau, est pratiquée dans la face frontale dudit plateau (2) directement à côté des barrettes de broyage (4) s'étendant radialement, au moins sur l'un des côtés de ces dernières, en vue d'évacuer les substances organiques (32) fragmentées.

2. Dispositif selon la revendication 1, **caractérisé par le fait que** le dispositif de bourrage (7) englobe une vis sans fin convoyeuse (6) dont l'axe (5) s'étend, sensiblement, dans un prolongement de l'axe (1) du plateau.

3. Dispositif selon l'une des revendications précédentes, **caractérisé par le fait que** le dispositif de bourrage (7) délivre les substances organiques pour l'essentiel à toute la face frontale du plateau (2), par l'intermédiaire d'un boîtier cylindrique (8) dont la sortie (10) se trouve en vis-à-vis à distance (19) de ladite face frontale ; et **par le fait que** ledit boîtier cylindrique (8) comporte des éléments de guidage (16, 17) interdisant un mouvement rotatoire des substances organiques amenées.

4. Dispositif selon la revendication 3, **caractérisé par le fait que** l'extrémité de sortie (10) du boîtier cylindrique (8) du dispositif de bourrage (7) présente une bague d'usure (50, 50') remplaçable.

5. Dispositif selon la revendication 3, **caractérisé par le fait que** la distance (19), comprise entre l'extrémité de sortie (10) du boîtier cylindrique (8) et la face frontale du plateau (2), peut être réglée.

6. Dispositif selon la revendication 5, **caractérisé par** la présence de moyens de réglage (52, 56, 58, 59) pour faire varier la distance (19) entre le boîtier (8) et la face frontale, au moyen d'un moteur (58), au cours du fonctionnement dudit dispositif.

7. Dispositif selon la revendication 3, **caractérisé par le fait que** la distance, comprise entre la face frontale du plateau (2) et l'extrémité de la vis sans fin convoyeuse (6) située côté plateau, mesure au moins 50 mm.

8. Dispositif selon la revendication 5, **caractérisé par le fait que** le plateau est monté sur un arbre d'entraînement, par l'intermédiaire d'une solidarisation filetée ; et **par le fait que** la distance, comprise entre l'extrémité de sortie du boîtier cylindrique et la face frontale dudit plateau, peut être réglée en faisant tourner ledit plateau en direction dudit arbre d'entraînement.

9. Dispositif selon l'une des revendications 3-8, **caractérisé par le fait qu'**au moins l'un (17) des éléments de guidage à effet de blocage s'engage axialement, dans le boîtier (8) du dispositif de bourrage (7), approximativement jusqu'aux barrettes de broyage (4) sur le plateau (2), et vient en prise le long des arêtes desdites barrettes, par une denture s'adaptant à la configuration en scie, en agissant comme un élément racleur.

10. Dispositif selon l'une des revendications précédentes, **caractérisé par le fait que** la hauteur des barrettes de broyage peut être réglée, par rapport à la face frontale du plateau, par insertion et verrouillage desdites barrettes de broyage dans des rainures radiales de profondeurs différentes.

11. Dispositif selon la revendication 10, **caractérisé par le fait que** les barrettes de broyage (4) sont arrêtables et libérables dans les rainures radiales, par l'intermédiaire d'un élément vissable (21) agencé centralement.

12. Dispositif selon l'une des revendications précédentes, **caractérisé par le fait que** le plateau (2) peut pivoter à l'écart du boîtier (8) du dispositif de bourrage (7), conjointement au moteur (3) qui lui est associé, pour permettre un remplacement des barrettes de broyage (4).

13. Dispositif selon la revendication 12, **caractérisé par le fait que** le plateau (2) peut être éloigné, par pivotement, jusqu'à une position frontale dans laquelle sa face frontale est orientée pour l'essentiel horizontalement, et est dirigée vers le haut.

14. Dispositif selon l'une des revendications 12 et 13, **caractérisé par le fait qu'**il comprend un dispositif mobile d'appui (13) conférant un appui à un ensemble structurel unitaire englobant le plateau (2) en association avec un arbre d'entraînement (20) et le moteur d'entraînement (3), lors du processus de pivotement au centre de gravité dudit ensemble structurel unitaire.

15. Dispositif selon l'une des revendications précédentes, **caractérisé par le fait qu'**il comprend un carter qui est destiné à recevoir et à évacuer les substances organiques fragmentées ; ceinture au moins le plateau (2) monté rotatif, en tant que canal annulaire (14) ouvert d'un côté ; se rattache au boîtier cylindrique (8) du dispositif de bourrage (7) ; et décrit un angle aigu avec le plan du plateau, au moins dans la région dudit plateau (2), en vue de l'évacuation des substances organiques.

16. Dispositif selon l'une des revendications précédentes, **caractérisé par le fait que** l'entraînement en rotation (3) du plateau (2) monté rotatif est sélectivement opérant dans les deux sens de rotation.

17. Dispositif selon l'une des revendications précédentes, **caractérisé par** la présence de moyens détecteurs (71) qui détectent des vibrations dudit dispositif au cours du fonctionnement, et mettent les entraînements (3, 11) dudit dispositif à l'arrêt lors d'un dépassement d'une valeur limite pouvant être préétablie, relative auxdités vibrations.

18. Dispositif selon l'une des revendications précédentes, **caractérisé par** la présence de moyens détecteurs (70) pour détecter le couple de rotation agissant lors de l'entraînement en rotation du plateau (2) monté rotatif; ainsi que de moyens de commande (75) en liaison opérante avec lesdits moyens détecteurs (70), en vue de régler la puissance de bourrage du dispositif de bourrage (7) sur une valeur correspondant à une valeur préétablie de ce couple de rotation.

19. Dispositif selon l'une des revendications précédentes, **caractérisé par le fait qu'**une rainure (34, 35, 36) se trouve, respectivement, de part et d'autre des barrettes de broyage (4).

20. Dispositif selon l'une des revendications précédentes, **caractérisé par le fait que** la rainure (34, 35, 36) est totalement arrondie ou biseautée.
